# EUROPEAN PATENT APPLICATION

(11) **EP 0 889 060 A1**
(43) Date of publication of application: **07.01.1999**
(21) Application number: 98304643.4
(22) Date of filing: 11.06.1998
(51) Int. Cl.: C08F 4/634, C08F 10/00

(54) **Transition metal-magnesium catalyst precursors, catalysts and polymerization processes**

(30) Priority: 30.06.1997 US 885147
(71) Applicant: Chevron Chemical Company LLC, San Francisco, CA 94105 (US)
(72) Inventor: Abbott, Ronald G., Kingwood, Texas 77345 (US)
(74) Representative: Nash, David Allan

(57) **Abstract**

A catalyst precursor, catalyst, prepolymer, methods for preparing same and olefin polymerization processes employing such catalysts are provided. The catalyst precursor is prepared by the process comprising adding a magnesium source to a solution comprising at least one transition metal compound and an alkyl halide, wherein the magnesium source is prepared by reacting magnesium, an alkyl halide and a Bronsted acid. The catalyst precursor, catalyst, prepolymer and polymer exhibit a relatively large mean particle size, a reduced amount of fines and the prepolymer exhibits an increased molecular weight.

## Description

### FIELD OF THE INVENTION

This invention relates to transition metal-magnesium catalyst precursors used to prepare catalysts which are useful for the polymerization of olefins.

### BACKGROUND OF THE INVENTION

It is known that olefins such as ethylene can be polymerized by means of a solid catalyst which comprises a transition metal compound and a co-catalyst of the organo-metallic type, most frequently an organo-aluminum compound. However, these catalysts often exhibit activities which result in the formation of polymers containing more than 100 parts per million by weight of transition metal. For most uses of such polymers, it is necessary to remove the catalyst residues by a special treatment.

It is also known that catalyst activity of the transition metal compounds can be increased by means of a preactivation treatment. This treatment involves contacting the transition metal compound with magnesium and one or more alkyl halide(s).

Another important aspect of a catalyst is the catalyst particle size. An increase in particle size improves settling and flowability characteristics of the catalyst which can be desirable in catalyst production. In addition, high levels of catalyst fines produce unacceptable amounts of fine polyolefin particles. Catalysts fines are defined here as particles of less than 20 microns diameter, prepolymer fines are particles of less than 80 microns diameter, and polymer fines are particles having a diameter of less than 180 microns. Consequently, an undesirable procedure to remove fine catalyst particles is required before polymerization can occur in a commercial reactor.

For many applications a high molecular weight polymer is desired.

### SUMMARY OF THE INVENTION

An object of this invention is to provide a catalyst precursor wherein relatively low amounts of catalyst precursor are lost during catalyst preparation.

Another object of this invention is to provide a relatively simple process for preparing a catalyst having low amounts of fines.

Another object of this invention is to provide a catalyst having relatively high activity.

Another object of this invention is to provide a prepolymer having good flowability.

Another object of this invention is to provide a prepolymer having relatively large particle size.

Another object of this invention is to provide a process for producing polymers having relatively large particle size.

In accordance with the present invention, there is provided a method for preparing a polymerization catalyst precursor comprising adding a magnesium source to a solution comprising at least one transition metal compound and an alkyl halide, wherein the magnesium source is prepared by reacting magnesium, an alkyl halide and a Bronsted acid.

Other aspects of the present invention include catalyst precursors, catalysts, prepolymers, methods for preparing same, and polymerization processes employing such catalysts and prepolymers.

### DETAILED DESCRIPTION OF THE INVENTION

The catalyst precursors of the present invention are prepared by adding a magnesium source to a solution comprising at least one transition metal compound and an alkyl halide.

The magnesium source is prepared by reacting magnesium, an alkyl halide and a Bronsted acid. Although not wishing to be bound by a theory, it is believed that the Bronsted acid reacts with the pendant alkyl groups to yield a stable anionic ligand on the magnesium while still performing the desired function of electron donor.

Suitable Bronsted acids include alcohols, diols, carboxylic acids, water, siloxides, silanes, hydroxymethylsilanes and silica with varying concentrations of surface hydroxyls. The alcohols and carboxylic acids preferably contain from 1 to 18 carbon atoms, more preferably from 1 to 12 carbon atoms.

Typical examples of suitable Bronsted acids include methanol, ethanol, n-propanol, isopropanol, n-butanol, isobutanol, sec-butanol, tert-butanol, cyclohexanol, n-octanol, benzyl alcohol, ethylene glycol, glycerol, formic acid, acetic acid, propionic acid, n-butyric acid, isobutyric acid, n-valeric acid, caproic acid, benzoic acid, lactic acid, oxalic acid, malonic acid, succinic acid, glutaric acid, adipic acid, maleic acid, malic acid, phthalic acid, isophthalic, cinnamic acid, and mixtures thereof. Excellent results have been obtained with methanol and isobutanol and they are preferred.

The molar ratio of Bronsted acid to magnesium can vary broadly. Generally, the molar ratio of Bronsted acid to magnesium is in the range of from 0.01 to 10, preferably from 0.01 to 5, and more preferably from 0.01 to 2. The most effective use of the Bronsted acid is to react the Bronsted acid with alkyl groups on the magnesium source in a stoichiometric ratio. Excess Bronsted acid can be added to the magnesium source to form a complex.

The alkyl halide is represented by the formula R"X, wherein R" is an alkyl radical containing from 1 to 12 carbon atoms, preferably from 1 to 8 carbon atoms. Alkyl chlorides are preferred.

Typical examples of alkyl halides include methyl chloride, ethyl chloride, n-propyl chloride, isopropyl chloride, n-butyl chloride, isobutyl chloride, tert-butyl chloride, n-pentyl chloride, n-hexyl chloride, n-heptyl chloride, methyl bromide, ethyl bromide, n-propyl bromide, isopropyl bromide, n-butyl bromide, isobutyl bromide, tert-butyl bromide, n-pentyl bromide, n-hexyl bromide, n-heptyl bromide, methyl iodide, ethyl iodide, n-propyl iodide, isopropyl iodide, n-butyl iodide, isobutyl iodide, tert-butyl iodide, n-pentyl iodide, n-hexyl iodide, and n-heptyl iodide. Butyl chloride or propyl chloride are preferred. Excellent results have been obtained with butyl chloride and it is especially preferred.

The molar ratio of magnesium to alkyl halide can vary broadly, but generally is in the range of from about 0.01 to about 10, preferably from about 0.01 to about 5. Preferably the Bronsted acid is added after the magnesium and alkyl halide have been reacted.

Conditions for reacting magnesium, the alkyl halide and the Bronsted acid can vary broadly. Generally, the reaction temperature is in the range of from about 0°C to about 150°C, preferably from about 0°C to about 120°C.

It has been found that employing a magnesium source prepared by reacting magnesium, an alkyl halide and a Bronsted acid produces a catalyst precursor and a prepolymer exhibiting, among other advantages, a relatively large mean particle size, a low amount of fines and improved flowability. Using increasing amounts of Bronsted acid in the catalyst precursor produces a polymer with increased molecular weight, for both number average and weight average molecular weight.

The at least one transition metal compound is represented by the formulas:

M(OR')ₛX'₍ₜ₋ₛ₎ or MO(OR')ₛX'₍ₜ₋ₛ₎

where M is a Group IVB or Group VB transition metal; R' is an alkyl group containing from 1 to 12 carbon atoms, preferably from 1 to 10 carbon atoms, and more preferably from 1 to 8 carbon atoms; X' is halide; t is 3 or 4; and s is 0-4.

Preferably, the mole ratio of OR' to X' is at least about 0.9, more preferably about 1 or greater, and most preferably the ratio is 1 to 1.5. Generally when the mole ratio of OR' to X' is at least about 0.9, there is less than 25 mole percent catalyst precursor loss, preferably less than 15 mole percent catalyst precursor loss.

Suitable transition metal compounds include those containing titanium, vanadium, zirconium, and hafnium. Preferably, the transition metal is vanadium, titanium, or a blend of vanadium and titanium.

Typical titanium compounds include trivalent or preferably tetravalent titanium. Suitable examples of titanium compounds include titanium tetramethoxide, titanium dimethoxide dichloride, titanium dimethoxydiethoxide, titanium tetraethoxide, titanium diethoxide dichloride, titanium tetra-n-propoxide, titanium tri-n-propoxide chloride, titanium di-n-propoxide dichloride, titanium tetra-n-butoxide, titanium n-butoxide trichloride, titanium tetrahexyloxide, titanium trihexyloxide chloride, titanium tetradecyloxide, titanium tetraeicosyloxide, titanium tetracyclohexyloxide, titanium tetrachloride, titanium trichloride, titanium tetrabromide, titanium tribromide and mixtures thereof. Especially preferred titanium compounds are a mixture of titanium tetrachloride and titanium tetra-n-propoxide. The mixture produces a titanium alkoxyhalide compound.

Typical vanadium compounds include tetravalent or pentavalent compounds. Suitable vanadium compounds include vanadium tetrabromide, vanadium tetrachloride, vanadium oxytrichloride, vanadium tetra-n-propoxide, vanadium tri-n-propoxide chloride, vanadium di-n-propoxide dichloride, vanadium tetra-n-butoxide, vanadium tri-n-butoxide chloride, vanadium tetramethoxide, vanadium trimethoxide bromide, vanadium dimethoxydiethoxide, vanadium tetraethoxide, vanadium diethoxide dichloride, vanadium tetrahexyloxide, vanadium dihexyloxide dibromide, vanadium tetradecyloxide, vanadium tetraeicosyloxide, vanadium tetracyclohexyloxide and mixtures thereof. Especially preferred vanadium compounds are a mixture of vanadium tetrachloride and vanadium tetra-n-propoxide. The mixture produces a vanadium alkoxyhalide compound.

Typical zirconium compounds include tetravalent or pentavalent compounds. Suitable zirconium compounds include zirconium tetrabromide, zirconium tetrachloride, zirconium oxytrichloride, zirconium tetra-n-propoxide, zirconium tri-n-propoxide chloride, zirconium tetra-n-butoxide, zirconium di-n-butoxide dichloride, zirconium tetramethoxide, zirconium dimethoxide dibromide, zirconium dimethoxydiethoxide, zirconium tetraethoxide, zirconium triethoxide chloride, zirconium tetrahexyloxide, zirconium tetradecyloxide, zirconium tetraeicosyloxide, zirconium tetracyclohexyloxide, and mixtures thereof.

Especially preferred zirconium compounds are a mixture of zirconium tetrachloride and zirconium tetra-n-propoxide. The mixture produces a zirconium alkoxyhalide compound.

Typical hafnium compounds include tetravalent or pentavalent compounds. Suitable hafnium compounds include hafnium tetrabromide, hafnium tetrachloride, hafnium oxytrichloride, hafnium tetra-n-butoxide, hafnium tri-n-propoxide chloride, hafnium n-butoxide trichloride, hafnium tetramethoxide, hafnium dimethoxydiethoxide, hafnium tetraethoxide, hafnium diethoxide dichloride, hafnium tetra-n-butoxide, hafnium di-n-butoxide dibromide, hafnium tetrahexyloxide, hafnium tetradecyloxide, hafnium tetraeicosyloxide, hafnium tetracyclohexyloxide, and mixtures thereof. Preferred hafnium compounds include a mixture of hafnium tetrachloride and hafnium tetra-n-propoxide. The mixture produces a hafnium alkoxyhalide compound.

Although the mole ratio of magnesium to transition metal compound can vary broadly, best results have been obtained when the mole ratio of magnesium to transition metal compound is within the range of about 2 to about 8, more preferably about 2 to about 7, and most preferably from 2 to 6.

Generally, the at least one transition metal compound and the alkyl halide are mixed in a suitable solvent or diluent. The solvent can be any liquid which dissolves the transition metal compound(s) and alkyl halide, and does not interfere with the reaction which produces the catalyst precursor. The solvent will typically be an organic solvent, preferably a hydrocarbon solvent. Suitable solvents include, but are not limited to, C₅ to C₁₀ hydrocarbons. Suitable solvent or diluent include, for example, n-pentane, n-hexane, n-heptane, methylcyclohexane, toluene, and xylenes. Of these, n-hexane and n-heptane are preferred solvents. Generally, the volume ratio of solvent to transition metal solution is in the range of from about 20 to about 50, preferably about 30 to about 35.

The magnesium source is then added to the solution containing the at least one transition compound and the alkyl halide. The magnesium source can be added to the at least one transition metal compound in solid powdered form or as a solid suspended in an organic liquid such as n-pentane, n-hexane, n-heptane, methylcyclohexane, toluene, and xylenes. Of these, n-hexane and n-heptane are preferred solvents.

The reaction conditions for preparing the catalyst precursor can vary broadly depending on the particular reactants employed. Generally, the reaction temperature will be in the range of from about 0°C to about 120°C, preferably from about 10°C to about 100°C.

In a typical reaction procedure, a solution containing at least one transition metal compound and alkyl halide is heated to the selected temperature. The magnesium source is then added to the liquid solution by a controlled addition, preferably the magnesium source is added slowly over time. While the period of time over which the magnesium source is added to the solution will depend on such factors as the size of the reaction mixture, typically that period of time will be about 1 to about 5 hours, preferably about 2 to about 4 hours. Once all of the magnesium source has been added to the liquid solution, the resulting mixture is cooled to room temperature and filtered to recover the catalyst precursor in the form of a powder.

Generally, the catalyst precursor is activated with an activator compound to produce the catalyst. Typically, the activator is an aluminoxane or an organometallic compound or compounds of a metal of Groups II or III of the Periodic Table of elements. Preferably, the activator is an organoaluminum compound, more preferably an alkylaluminum compound or an alkylaluminum halide compound. Examples of preferred activators include, but are not limited to, trialkylaluminum compounds such as triethylaluminum, tri-n-octylaluminum and the like.

The aluminum to transition metal mole ratio is about 0.01 to about 100, preferably about 0.05 to about 50. The catalyst precursor is activated by the activator compound by methods conventional in the art.

The activator compound can be used in neat form, or it can be supported on a carrier. If a carrier is employed, it can be an inert, organic or inorganic, carrier. The catalyst precursor can be activated prior to introduction into the polymerization reactor, or the catalyst precursor and activator compound can be added to the polymerization reactor separately.

In one preferred embodiment, the olefin polymerization catalyst is contacted with a limiting amount of olefin, under polymerization conditions, to produce a prepolymer. A sufficient amount of olefin is used such that the prepolymer obtained has a melt index in the range of about 0.1 to about 10 g/10 minutes determined according to ASTM D-1238.

The prepolymer is present in an amount sufficient to reduce fines in the catalyst and the polymerization process. Preferably, the prepolymer will be in the range of about 1% to about 50% by weight based upon the weight of the catalyst and prepolymer. Typically, the prepolymer contains about 1250 parts by weight of olefin, such as ethylene, per part by weight of transition metal.

Prepolymer prepared according to the present invention exhibits a mean particle size of prepolymer is generally 250 microns or greater when the prepolymer contains about 1250 parts by weight ethylene, per part by weight of transition metal, preferably 300 microns or greater, and more preferably 350 microns or greater. The increased particle size of the prepolymer is also demonstrated in improved flowability.

In another preferred embodiment, Bronsted acid is present in the magnesium source in an amount sufficient to produce catalyst prepolymer wherein at least about 40 percent of the particles have a diameter of greater than 400µ when the prepolymer contains about 1250 parts by weight ethylene, per part by weight of transition metal, preferably at least about 45 percent of the particles have a diameter of greater than 400µ, and more preferably at least about 50 percent of the particles have a diameter of greater than 400µ.

In another preferred embodiment, Bronsted acid is present in the magnesium source in an amount sufficient to produce about 50 percent more prepolymer particles having a diameter of 400µ or greater, when compared to a prepolymer made by a similar process without the Bronsted acid, preferably at least about 100 percent more prepolymer particles having a diameter of 400µ or greater, and more preferably at least about 200 percent more prepolymer particles having a diameter of 400µ or greater.

Prepolymerization is generally carried out under a pressure of less than about 70 psi and at a temperature from about 40°C to about 150°C. This operation can be performed by introducing the monomer(s) comprising, e.g., ethylene (and possibly other olefins), into a liquid diluent such as a saturated aliphatic hydrocarbon or, in the absence of diluent, by direct contact between the monomer(s) in the gaseous condition and the constituents of the catalyst. Optionally, the prepolymer can be filtered prior to polymerization.

Prepolymerization can be carried out in the presence of a chain growth limiter to produce a polymer having the desired melt index. Frequently, hydrogen is employed. If hydrogen is employed, it is generally present in an amount from about 1 to about 80% of the volume of the monomer(s).

Prepolymer prepared according to the present invention will generally have fines of less than 20% by volume when the prepolymer contains about 1250 parts by weight ethylene, per part by weight of transition metal, preferably less than 18%, and more preferably less than 15% by volume. In an especially preferred embodiment, the prepolymer will contain fines of less than 10% by volume. Fines are defined as prepolymer particles of less than 180 microns in diameter. Particle sizes can be determined by using a Malvern 2600 Particle Size Analyzer or by standard sieving techniques.

Fine particles are especially disadvantageous in gas phase olefin polymerization reactions. The fine particles are too light for gas phase polymerization, and easily blow out the top of the reactor bed and into areas of the reactor where polymerization is not intended to occur. To avoid this problem, the fine particles must be removed prior to polymerization. This is typically done via an elutriation procedure. This procedure involves first having to prepare a homogeneous suspension of the particles in an elutriation liquid, then elutriating the catalyst by filtering the suspension through one or two elutriation columns.

Because the present invention provides catalysts and prepolymers with fewer fine particles, the aforementioned elutriation procedure can be avoided. This simplifies the catalyst preparation by eliminating one preparative step while also significantly improving the catalyst yield.

The prepolymer is then used as a catalyst for the polymerization of the olefin. Polymerization is accomplished by adding more olefin to the prepolymer under polymerization conditions.

A variety of polymerizable compounds are suitable for use in the process of the present invention. Olefins which can be homopolymerized or copolymerized with the invention catalysts include alpha olefins having 2 to 18 carbon atoms. Ethylene is preferred. Comonomers such as propylene, butene, pentene, heptene and hexene can also be employed.

The catalyst can be introduced into the polymerization reactor directly or in the form of prepolymer. The catalyst can be used in any polymerization method known in the art. The catalyst is particularly effective in the "low pressure" polymerization of olefins, although the catalyst can also be used in gas phase or in "high pressure" polymerization. The temperature in a "low pressure" polymerization is typically maintained between 40°C and 500°C, preferably between 70°C and 300°C. The pressure is typically maintained between 100 psi and 1000 psi, and preferably is between 250 psi and 500 psi. Hydrogen can be used to control the molecular weight of the polymer.

In another preferred embodiment, Bronsted acid is present in the magnesium source in an amount sufficient to increase the weight average molecular weight of the final polymer by at least about 40 percent, when compared to a polymer prepared by a similar process without the Bronsted acid, preferably about 45 percent.

The olefin polymers made with the catalyst of this invention are useful in preparing articles by conventional polyolefin processing techniques such as injection molding, rotational molding, and extrusion of film.

Having described the basic concepts of the invention, reference is now made to the following Examples which are given by way of illustration, and not of limitation, of the practice of the present invention in the preparation of the catalyst precursor and catalyst, and the use of the catalyst in the polymerization of olefins.

### EXAMPLES

### Comparative Example 1

### Magnesium Source

(ROH/Mg = 0.00)

A 50 gallon reactor was charged with 15 gallons hexane, 15 g (0.08 moles) elemental iodine, 333 g (13.7 moles) magnesium, and 1431 mL (13.7 moles) n-butylchloride and heated to 85°C for four hours.

### Catalyst Precursor

The resulting mixture was cooled to ambient temperature and slowly fed over the course of 2½ hours to a 250 gallon reactor containing 70 gallons hexane, 471 mL (1.7 moles) Ti(O-n-C₃H₇)₄, (TNPT), 188 mL (1.7 moles) TiCl₄, and 1431 mL (13.7 moles) n-butylchloride at a temperature of 85°C and stirred an additional 2 hours. The reaction product was cooled to ambient temperature and sampled for butylchloride (residual butylchloride), followed by washing with 2 X 100 gallon aliquots hexane.

### Catalyst

Approximately 20 gallons of hexane was added to the 250 gallon reactor to bring the catalyst slurry to a volume of 115 gallons. A total of 3549 mL (2.5 moles) of 35% tri-n-octylaluminum (TNOA) in isopentane was then added to the reaction mixture.

### Prepolymer

The reaction mixture was heated to 68°C at a stir rate of 225 rpm. Upon achieving the desired temperature, hydrogen was introduced into the reactor at a rate of 0.018 lbs/hr for 45 minutes, followed by introduction of ethylene at a feed rate of 25 Ibs/hour. Ethylene addition continued to a total of 340 lbs total ethylene, at which point both ethylene and hydrogen feed were terminated. The resulting prepolymer was then dried, isolated and characterized as described below.

The prepolymer was exposed to air under a vent hood to remove any trace hydrocarbons and to oxidize the prepolymer to an inert form. The particle size distribution and mean particle size of the resulting free flowing powder was evaluated using a Malvern 2600 instrument.

### Example 2

### Magnesium Source

(ROH/Mg = 0.05)

A 50 gallon reactor was charged with 15 gallons hexane, 15 g (0.08 moles) elemental iodine, 333 g (13.7 moles) magnesium and 1431 mL (13.7 moles) n-butylchloride and heated to 85°C for four hours. Once the resulting mixture was cooled to ambient temperature, 63 mL (0.69 moles) isobutanol was added and stirred an additional hour.

The catalyst precursor, catalyst and prepolymer were prepared as described in Example 1 with the exception of employing the magnesium source prepared with isobutanol.

### Example 3

(ROH/Mg = 0.10)

The magnesium source, catalyst precursor, catalyst and prepolymer were prepared as described in Example 2 with the exception that the isobutanol donor level in the magnesium source was increased to 126 mL (1.37 moles) isobutanol.

### Example 4

(ROH/Mg = 0.15)

The magnesium source, catalyst precursor, catalyst and prepolymer were prepared as described in Example 2 with the exception that the isobutanol donor level in the magnesium source was increased to 189 mL (2.06 moles) isobutanol.

### Example 5

(ROH/Mg = 0.15; TNPT/TiCl4 = 0)

The magnesium source, catalyst precursor, catalyst and prepolymer were prepared as described Example 4 with the exception that a total of 377 mL (3.43 moles) TiCl₄ was added to the 250 gallon reactor with no TNPT.

The results of Examples 1-5 are tabulated in Table 1.

Flowability of the prepolymer was determined according to ASTM D 1895-69 Pourability.

The weight average molecular weight and number average molecular weight were determined by gel permeation chromatography.

### In Table 1:

Catalyst mmol Ti/L is the Ti concentration in the catalyst slurry after washing. Catalyst Ti/Mg is the mole ratio of Ti/Mg observed.

Prepolymer Particle Size is the percent of particles having a particle size greater than the indicated particle size in microns.

Prepolymer MPS is the mean particle size.

Mw is weight average molecular weight.

Mₙ is number average molecular weight.

**Table 1**

| **Example No.** | **1** | **2** | **3** | **4** | **5** |
|---|---|---|---|---|---|
| Reagents | | | | | |
| Ti(OR)₄/TiCl₄ | 1 | 1 | 1 | 1 | 0 |
| ROH/Mg | 0.00 | 0.05 | 0.10 | 0.15 | 0.15 |
| | | | | | |

| Catalyst | | | | | |
|---|---|---|---|---|---|
| mmol Ti/L | 15.5 | 15.4 | 14.2 | 15.4 | 6.0 |
| Ti/Mg | 0.26 | 0.26 | 0.25 | 0.24 | 0.20 |
| | | | | | |

| Prepolymer | | | | | |
|---|---|---|---|---|---|
| Ti ppm by weight | 841 | 838 | 857 | 797 | 251 |
| Yield g PE/mmol Ti | 56.9 | 57.2 | 55.9 | 60.1 | 190 |
| Yield g PE/g Ti | 1190 | 1190 | 1170 | 1250 | 3980 |
| Particle Size µ >400 | 12.8% | 45.1% | 62.1% | 69.2% | 42.4% |
| >250 | 41.6% | 53.9% | 79.3% | 85.7% | 49.8% |
| >160 | 59.3% | 74.4% | 87.3% | 92.3% | 54.7% |
| >125 | 64.4% | 78.0% | 90.3% | 94.5% | 55.8% |
| >80 | 72.2% | 83.5% | 93.9% | 97.0% | 57.3% |

| | | | | | |
|---|---|---|---|---|---|
| <80 (fines) | 27.8% | 15.5% | 6.1% | 3.0% | 42.7% |
| MPS µ | 216 | 366 | 497 | 558 | 246 |
| Flowability | + 0 | + 2 | + 3 | + 4 | + 0 |
| M_{w} | 91,300 | 135,000 | 175,000 | 270,000 | 92,500 |
| Mₙ | 16,900 | 27,400 | 41,700 | 72,900 | 13,400 |
| M_{w}/Mₙ | 5.40 | 4.93 | 4.20 | 3.70 | 6.90 |

The results in Table 1 demonstrate the increase in particle size and reduction in fines of a catalyst prepolymer prepared by adding a magnesium source to a solution containing at least one transition metal compound, wherein the magnesium source was prepared by reacting magnesium, an alkyl halide and a Bronsted acid, such as isobutanol. An increase in M_{w} and Mₙ and improved flowability for the prepolymer were also observed when employing the Bronsted acid and a reverse addition process. Higher molecular weights effect film toughness, impact strength, tear strength, etc. Low amounts of catalyst precursor loss were demonstrated during the preparation of the catalyst precursor.

### Comparative Example 6

### Magnesium Source

A 500 mL round-bottom flask equipped with a gas inlet adapter, a reflux condenser and a rubber septum was charged with 250 mL of freshly distilled heptane, 3.00 g (123 mmoles) of Mg powder and 0.01 g (0.04 mmoles) of I₂ under a blanket of argon. The flask was then charged with 12.9 mL (123 moles) of dry n-butylchloride via a syringe and heated to 95°C for three hours. The resulting gray slurry was cooled to room temperature.

### Catalyst Precursor

A second 500 mL round-bottom flask was then charged with 100 mL of freshly distilled heptane, 12.9 mL (123 mmoles) of dry n-butylchloride, 3.40 mL (12.3 mmoles) of Ti(O-n-C₃H₇)₄, and 1.35 mL (12.3 mmoles) of TiCl₄ and heated to 85°C. The gray slurry from the initial reaction was then slowly added over a one hour period. After stirring for an additional hour, the resulting brown slurry was cooled to ambient temperature, filtered, rinsed twice with 200 mL of dry heptane and dried.

### Catalyst

A 250 mL autoclave reactor was charged with 0.35 g of catalyst in 175 mL of dry freshly distilled heptane plus sufficient 25 wt. % TNOA (tri-n-octylaluminum) cocatalyst to bring the total Al/Ti to 1.0.

### Prepolymer

The reaction mixture was heated to 65°C at a stir rate of 500 rpm and the pressure was increased to 10 psi with ethylene with 0.6 standard liters of H₂. The total reaction pressure was then maintained throughout the reaction at 30 psi by the addition of ethylene on demand. The reaction was vented when 18.21 SL of ethylene was consumed. The resulting prepolymer was filtered, rinsed and dried. Results are tabulated in Table 2.

### Example 7

### Magnesium Source

ROH/Mg of 0.07

A 500 mL round-bottom flask equipped with a gas inlet adapter, a reflux condenser and a rubber septum was charged with 250 mL of freshly distilled heptane, 3.00 g (123 mmoles) of Mg powder and 0.01 g (0.04 mmoles) of I₂ under a blanket of argon. The flask was then charged with 12.9 mL (123 moles) of dry n-butylchloride via a syringe and heated to 95°C for three hours. The resulting gray slurry was cooled to room temperature, followed by the addition of 0.33 mL (8 mmoles) methanol.

The catalyst precursor, catalyst and prepolymer were prepared as described in Example 6 with the exception of using the magnesium source described above containing methanol.

### Example 8

### Magnesium Source

ROH/Mg of 0.17

The magnesium source was prepared as described in Example 7 with the exception of using 0.83 mL (21 mmoles) methanol in preparing the magnesium source.

The catalyst precursor, catalyst and prepolymer were prepared as described in Example 6 with the exception of using the magnesium source described above containing methanol.

**Table 2**

| Prepolymer Properties | | | |
|---|---|---|---|
| Prepolymer Example | MeOH/Mg | M_{w} | Mₙ |
| 6 | 0.0 | 121,000 | 25,800 |
| 7 | 0.07 | 179,000 | 40,300 |
| 8 | 0.17 | 300,000 | 65,400 |

The results in Table 2 demonstrate the increase in number average and weight average molecular weight of the prepolymer when employing a catalyst prepared with increasing amounts of alcohol, such as methanol.

## Claims

1. A method for preparing polymerization catalyst precursor comprising adding a magnesium source to a solution comprising at least one transition metal compound and an alkyl halide,
wherein the magnesium source is prepared by reacting magnesium, an alkyl halide and a Bronsted acid, and
wherein the at least one transition metal compound is represented by the formula:
M(OR')_{S}X'₍ₜ₋ₛ₎
where M is a Group IVB or Group VB transition metal; R' is an alkyl group containing from 1 to 12 carbon atoms; X' is halide; t is 3 or 4; and s is 0-4.

2. The method of claim 1 wherein the Bronsted acid is an alcohol or an acid containing from 1 to 18 carbon atoms.

3. The method of claim 2 wherein the alcohol or acid contains from 1 to 12 carbon atoms.

4. The method of claim 3 wherein the Bronsted acid is an alcohol.

5. The method of claim 4 wherein the Bronsted acid is isobutanol or methanol.

6. The method of any previous claim wherein the mole ratio of the Bronsted acid to Mg is in the range of from 0.01 to 10.

7. The method of claim 6 wherein the mole ratio of the Bronsted acid to Mg is in the range of from 0.01 to 5.

8. The method of claim 7 wherein the mole ratio of the Bronsted acid to Mg is in the range of from 0.01 to 2.

9. The method of any previous claim wherein R' contains from 1 to 8 carbon atoms.

10. The method of any previous claim wherein the mole ratio of OR' to X is at about 0.9 or greater.

11. The method of claim 10 wherein the mole ratio of OR' to X is about 1 or greater.

12. The method of claim 11 wherein the mole ratio of OR' to X is 1 to 1.5.

13. The method of claim 12 wherein there is less than 25 mole percent catalyst precursor loss.

14. The method of Claim 13 wherein there is less than 15 mole percent catalyst precursor loss.

15. The method of any previous claim wherein the mole ratio of magnesium to transition metal is in the range of from about 2 to about 8.

16. The method of any previous claim wherein M comprises titanium, vanadium, or both.

17. The method of claim 16 wherein the at least one transition metal compound comprises titanium tetrachloride and titanium tetra-n-propoxide.

18. The method of any previous claim wherein the alkyl halide contains from 1 to 12 carbon atoms.

19. The method of claim 18 wherein the alkyl halide is butyl chloride.

20. A polymerization catalyst precursor obtainable by the method of any one of claims 1 to 19.

21. A polymerization catalyst obtainable by reacting the catalyst precursor of claim 20 with an organoaluminum compound.

22. The catalyst of claim 21 wherein the organoaluminium compound comprises a trialkylaluminum compound.

23. The catalyst of claim 22 wherein the trialkylaluminum compound comprises triethylaluminium or tri-n-octyl aluminum or both.

24. A composition obtainable by contacting the catalyst of any one of claims 20 to 23 with an olefin to form a prepolymer.

25. The composition of claim 24, wherein the prepolymer exhibits a mean particle size of 250 microns or greater when prepolymerized to contain about 1250 parts by weight ethylene per part by weight of transition metal.

26. The composition of claim 25, wherein the prepolymer exhibits a mean particle size of 300 microns or greater when prepolymerized to contain about 1250 parts by weight ethylene per part by weight of transition metal.

27. The composition of claim 26, wherein the prepolymer exhibits a mean particle size of 350 microns or greater when prepolymerized to contain about 1250 parts by weight ethylene per part by weight of transition metal.

28. The composition according to any one of claims 24 to 27 wherein the prepolymer contains less than 20% fines by volume.

29. The composition according to claim 28 wherein the prepolymer contains less than 18% fines by volume.

30. The composition according to claim 29 wherein the prepolymer contains less than 15% fines by volume.

31. The composition according to any one of claims 24 to 30 wherein the Bronsted acid is present in the magnesium source in an amount sufficient to produce prepolymer wherein about 40 percent of the prepolymer particles have a diameter of greater than 400µ.

32. The composition according to claim 31 wherein the Bronsted acid is present in the magnesium source in an amount sufficient to produce prepolymer wherein about 45 percent of the prepolymer particles have a diameter of greater than 400µ.

33. The composition according to claim 32 wherein the Bronsted acid is present in the magnesium source in an amount sufficient to produce prepolymer wherein about 50 percent of the prepolymer particles have a diameter of greater than 400µ.

34. The composition according to any one of claims 24 to 30 wherein the Bronsted acid is present in the magnesium source in an amount sufficient to produce at least about 50 percent more prepolymer particles having a diameter of 400µ or greater, when compared to a prepolymer made by a similar process without the Bronsted acid.

35. The composition according to claim 34 wherein the Bronsted acid is present in the magnesium source in an amount sufficient to produce at least about 100 percent more prepolymer particles having a diameter of 400µ or greater, when compared to a prepolymer made by a similar process without the Bronsted acid.

36. The composition according to claim 35 wherein the Bronsted acid is present in the magnesium source in an amount sufficient to produce at least about 200 percent more prepolymer particles having a diameter of 400µ or greater, when compared to a prepolymer made by a similar process without the Bronsted acid.

37. A process for the polymerization of olefins comprising contacting under polymerization conditions, the catalyst of any one of claims 21 to 23 and at least one olefin.

38. The process of claim 37 wherein the Bronsted acid is present in the magnesium source in an amount sufficient to increase the weight average molecular weight of the final polymer by at least about 40 percent, when compared to a polymer prepared by a similar process without the Bronsted acid.

39. The process of claim 38 wherein the Bronsted acid is present in the magnesium source in an amount sufficient to increase the weight average molecular weight of the final polymer by at least about 45 percent, when compared to a polymer prepared by a similar process without the Bronsted acid.

40. A polymerization catalyst precursor prepared by the method comprising adding a magnesium source to a solution comprising at least one transition metal compound and an alkyl halide;
wherein the magnesium source is prepared by reacting magnesium, butyl chloride and isobutanol or methanol, and
wherein the at least one transition metal compound comprises a mixture of titanium tetra-n-propoxide and titanium tetrachloride.
